(19) Europäisches Patentamt / European Patent Office / Office européen des brevets

(11) **EP 2 151 328 B1**

(12) **EUROPÄISCHE PATENTSCHRIFT**

(45) Veröffentlichungstag und Bekanntmachung des Hinweises auf die Patenterteilung:
**06.11.2013 Patentblatt 2013/45**

(21) Anmeldenummer: **09010111.4**

(22) Anmeldetag: **05.08.2009**

(51) Int Cl.:
*B42D 15/00* (2006.01)   *G02B 5/18* (2006.01)
*B44F 1/02* (2006.01)   *B44F 1/10* (2006.01)
*B44C 1/10* (2006.01)   *B60R 13/10* (2006.01)

(54) **Folie, Verfahren zu deren Herstellung, sowie Verwendung**

Film, method for its manufacture and usage

Feuille, son procédé de fabrication et son utilisation

(84) Benannte Vertragsstaaten:
**AT BE BG CH CY CZ DK EE ES FI FR GB GR HR HU IE IS IT LI LT LU LV MC MK MT NL NO PL PT RO SE SI SK SM TR**

(30) Priorität: **06.08.2008 DE 102008036670**

(43) Veröffentlichungstag der Anmeldung:
**10.02.2010 Patentblatt 2010/06**

(73) Patentinhaber:
• **Leonhard Kurz Stiftung & Co. KG**
  **90763 Fürth (DE)**
• **Erich Utsch AG**
  **57080 Siegen (DE)**

(72) Erfinder:
• **Süssner, Hubert, Dipl.Ing.**
  **90522 Oberasbach (DE)**
• **Thäter, Mathias**
  **91126 Schwabach/Forsthof (DE)**

(74) Vertreter: **Zinsinger, Norbert**
**Louis - Pöhlau - Lohrentz**
**Postfach 30 55**
**90014 Nürnberg (DE)**

(56) Entgegenhaltungen:
EP-A1- 0 461 475   EP-A1- 1 482 013
WO-A2-2006/018171   DE-A1- 10 226 116
GB-A- 2 093 404   JP-A- 2001 293 982
US-A- 5 260 165

EP 2 151 328 B1

**Beschreibung**

Die Erfindung betrifft eine Folie, welche mindestens eine transparente Replizierschicht mit einer diffraktiven Reliefstruktur sowie eine Reflexionsschicht umfasst, sowie eine Verwendung dieser Folie

Folien der eingangs genannten Art sind bekannt und werden zur Sicherung und Dekoration von Gegenständen, Dokumenten, Verpackungen und dergleichen eingesetzt. Dabei werden metallische oder nicht-metallisch anorganische Reflexionsschichten eingesetzt, um einen von der diffraktiven Reliefstruktur erzeugten, optisch variablen Effekt optimal zur Geltung zu bringen. Ein solcher optisch variabler Effekt äußert sich dadurch, dass ein Betrachter unter unterschiedlichen Blickwinkeln zur Folie unterschiedliche Erscheinungsbilder der Folie wahrnimmt, wie unterschiedliche Farbeindrücke und/oder Bildmotive und/oder Zeichen und/oder Mattierungen wahrnimmt. Dabei sind unter anderem Hologramme, holographische Darstellungen mit kinematischen Effekten und dergleichen erkennbar.

Die US 5 260 165 A beschreibt ein optisches Datenspeichermedium, z.B. eine CD-R, das ein transparentes Substrat, eine auf dem Substrat angeordnete Beschichtung zur Ausbildung von Reliefstrukturen und eine auf der Beschichtung angeordnete Speicherschicht aufweist. Die Speicherschicht hat eine Dicke im Bereich von 100 Å bis 10 $\mu$m und umfasst ihrerseits eine erste Speicherlage mit einem reflektierenden Farbstoff, eine zweite Speicherlage mit einem absorbierenden Farbstoff und eine zwischen der ersten und zweiten Speicherlage angeordnete, transparente Zwischenlage.

Die DE 102 26 116 A1 betrifft ein Sicherheitselement für Sicherheitspapiere, Banknoten, Ausweiskarten oder dergleichen, mit wenigstens einer Kunststoffschicht, auf welcher wenigstens zwei Metallschichten unterschiedlicher Farbe derart nebeneinander und auf derselben Seite der Kunststoffschicht angeordnet sind, dass die unterschiedlichen Farben visuell überprüfbar sind.

Aus der EP 0 461 475 A1 ist ein Schichtaufbau für eine Teil-Prägefolie bestehend aus einem Trägerfilm und einer Dekorschicht sowie einer Kleberschichtfolie bekannt, bei der die Dekorschicht eine erste und eine zweite Lackschicht aufweist. Die erste Lackschicht kann transparent sein, die zweite Lackschicht eingefärbt. Zwischen den Lackschichten kann eine räumliche Musterung, die beispielsweise von einem Hologramm gebildet ist, ausgebildet sein.

Für spezielle Anwendungsgebiete haben sich die bekannten Folien als wenig geeignet erwiesen, da die erzeugten optisch variablen Effekte zu auffällig sind, zu stark spiegeln und/oder das menschliche Auge irritieren. Dies ist beispielsweise bei Bauteilen im Innenraum eines Kraftfahrzeugs, die sich im direkten Blickfeld des Fahrers befinden, bei KFZ-Nummernschildern oder auch bei Möbeln, Verpackungen, bestimmten Wertdokumenten und dergleichen der Fall.

Für diese Anwendungen wurde daher auf Folien zurückgegriffen, die anderweitige Sicherungsmerkmale oder Dekorelemente aufweisen.

Nachfolgend wird zur Veranschaulichung ein Anwendungsbeispiel aus dem Bereich der KFZ-Nummernschilder näher beschrieben, das aber im Wesentlichen auch auf die anderen oben genannten Anwendungsfälle übertragbar ist.

KFZ-Nummernschilder bestehen in der Regel aus einer Trägerplatte, die üblicherweise aus einem Aluminium- oder Stahlblech besteht. In die Trägerplatte wird mittels eines mechanischen Prägevorgangs eine Kennzeichenlegende erhaben eingeprägt. Dabei besteht die Kennzeichenlegende üblicherweise aus alphanumerischen Zeichen, die beispielsweise in Deutschland auf den Zulassungsort des Kraftfahrzeugs hinweisen sowie eine individuelle Nummerierung ausbilden. Um die Kennzeichenlegende des geprägten KFZ-Nummernschilds gut sichtbar zu machen, werden die erhaben geprägten Bereiche farbig beschichtet. Dazu wird üblicherweise ein entsprechender Farbübertrag mittels einer Prägefolie, die aus einer Trägerfolie besteht, welche mit einer davon ablösbaren farbigen Dekorlage verbunden ist, durchgeführt. Beim Farbübertrag wird die Trägerfolie in mechanischen Kontakt mit den erhaben geprägten Bereichen des KFZ-Nummernschilds gebracht und die Dekorlage unter Druck, gegebenenfalls auch unter Druck und erhöhter Temperatur, darauf übertragen.

Um die Erkennbarkeit der Kennzeichenlegende zu erhöhen, ist die Trägerplatte meist mit einer in Kontrastfarbe zur Kennzeichenlegende ausgebildeten, retroreflektierenden Folie ganzflächig kaschiert. Bei den in Deutschland üblichen Kfz-Nummernschildern sind die Trägerplatten dazu auf ihrer Vorderseite mit einer  weißen, retroreflektierenden Folie kaschiert, während die Kennzeichenlegende mit einer schwarzen Dekorfolie beprägt ist.

Aufgrund der steigenden Anforderungen an die Fälschungssicherheit von KFZ-Nummernschildern wurden die, auf die Trägerplatte eines KFZ-Nummernschilds aufkaschierten retroreflektierenden Folien oder auch die Dekorfolien bereits mit zusätzlichen Sicherheitsmerkmalen zu versehen, welche nicht ohne weiteres mit dem bloßen menschlichen Auge erkennbar sind und daher das gewohnte Erscheinungsbild des KFZ-Nummernschildes und dessen Auslesbarkeit nicht beeinträchtigen. Dazu werden die Sicherheitsmerkmale beispielsweise besonders klein ausgebildet oder so eingebracht, dass sie nur unter ganz bestimmten Betrachtungswinkeln sichtbar sind.

So offenbart die DE 102 41 803 A1 eine Prägefolie mit einer Trägerfolie und einer davon ablösbaren Dekorlage zum Beprägen eines KFZ-Nummernschildes im Bereich der Kennzeichenlegende. Die Prägefolie wird durch Einbringen von Sicherheitsmerkmalen individualisiert, indem Bereiche der Dekorlage entfernt, farblich verändert oder unlösbar mit der Trägerfolie verbunden werden.

Derartige zusätzliche Sicherheitsmerkmale haben sich aber als relativ leicht nachahmbar erwiesen, so dass nach wie vor das Bedürfnis besteht, eine fälschungssichere Folie zur Beschichtung der Kennzeichenlegende bereitzustellen. Dabei wären insbesondere die optisch variablen Effekte, die durch eine der eingangs genannten Folien erzeugt werden, welche mindestens eine transparente Replizierschicht mit einer diffraktiven Reliefstruktur sowie eine Reflexionsschicht umfassen, als zusätzliche Sicherheitsmerkmale aufgrund ihrer hohen Fälschungssicherheit und/oder eindrucksvollen dekorativen Wirkung von besonderem Interesse.

Dies trifft nicht nur für KFZ-Nummernschilder zu, sondern auch für die bereits oben genannten Bauteile im Innenraum eines Kraftfahrzeugs, bei Möbeln, Verpackungen und bestimmten Wertdokumenten, wie im Bereich eines Magnetstreifens einer Bankkarte und dergleichen. Es besteht daher generell das Bedürfnis nach fälschungssicheren und/oder dekorativen Folien, die für diese speziellen Anwendungen das gewohnte Erscheinungsbild der damit beschichteten Artikel im Wesentlichen erhalten.

Es ist daher die Aufgabe der Erfindung, eine Verwendung einer Folie, die eine, einen optisch variablen Effekt erzeugende diffraktive Reliefstruktur aufweist, wobei der optisch variable Effekt für einen Betrachter erst bei genauerer Prüfung der Folie erkennbar ist bzw. wird, anzugeben.

Die Aufgabe wird durch eine Folie nach Anspruch 1 gelöst. Unter einem "latenten" optisch variablen Effekt wird dabei verstanden, dass der optisch variable Effekt für einen Betrachter der Folie nur unter bestimmten äußeren Bedingungen erkennbar wird. Im Vergleich zu optisch variablen Effekten, die an Folien mit metallischen Reflexionsschichten erkennbar sind, zeigt die Folie einen lediglich schwachen oder diskreten optisch variablen Effekt, der sich gegebenenfalls erst unter Beleuchtung mit einer geeigneten Lichtquelle zeigt.

So erkennt ein Betrachter vorzugsweise erst bei Begutachtung der erfindungsgemäßen Folie auf einer, der diffraktiven Reliefstruktur abgewandten Seite der Replizierschicht unter Normalbeleuchtung und in einem ersten Abstand von maximal etwa 0,5 m zur Folie, und/oder unter Beleuchtung der Folie mit einer geeigneten Lichtquelle oder Punktlichtquelle, wobei unter einer derartigen Beleuchtung eine Erkennbarkeit auch in einem noch größeren Abstand möglich sein kann, neben der Farbwirkung der  mindestens einen Farblackschicht weiterhin einen durch die diffraktive Reliefstruktur erzeugten, optisch variablen Effekt, der die Fälschungssicherheit erhöht und/oder dekorative Eigenschaften besitzt.

Gleichzeitig ist aber unter Normalbeleuchtung und in einem zweiten Abstand von größer als etwa 0,5 m zur Folie, insbesondere in einem Abstand von mindestens 1 m bis 2 m zur Folie, für einen Betrachter im Wesentlichen nur noch die Farbwirkung der Farblackschicht erkennbar. Der durch die diffraktive Reliefstruktur erzeugte, optisch variablen Effekt ist nicht oder im Wesentlichen nicht mehr erkennbar, so dass das optische Erscheinungsbild des mit der Folie beschichteten Artikels nicht oder nur unwesentlich von dem eines herkömmlichen, farbig gestalteten Artikels abweicht.

Als eine Betrachtung unter Normalbeleuchtung wird hierbei insbesondere eine Betrachtung der erfindungsgemäßen Folie in einer Farbmusterungskabine, wie beispielsweise byko-spectra Version 2, verstanden, wobei zur Beleuchtung die Normlichtart D65 verwendet wird.

Der Einsatz einer pigmentierten Farblackschicht anstelle einer metallischen oder nicht-metallisch anorganischen Reflexionsschicht ermöglicht somit die Ausbildung einer Folie, die latente optisch variable Effekte aufweist, welche bei normaler Betrachtung nicht oder nur wenig auffallen und das Auge nicht oder kaum blenden oder irritieren.

Der Brechungsindex eines Materials setzt sich aus einem Realteil und einem Imaginärteil zusammen, wobei der Imaginärteil für die Lichtabsorption des Materials verantwortlich ist. Bei der Verwendung der mindestens einen Farblackschicht anstelle einer herkömmlichen Reflexionsschicht wird die Lichtbeugung in Reflexion zu einem Teil auch durch den Imaginärteil des Brechungsindex der Farblackschicht  verursacht. Die Beugungseffizienzen von Reliefstrukturen in Form von Beugungsgittern erster Ordnung bewegen sich hierbei typischerweise im Bereich von 0,2 bis 2 %. Der Realteil des Brechungsindex einer Farblackschicht unterscheidet sich vom Realteil des Brechungsindex einer Replizierschicht üblicherweise wenig. Das aufgrund der Unterschiede in den Brechungsindices der mindestens einen Farblackschicht und der Replizierschicht in Reflexion an der diffraktiven Reliefstruktur gebeugte Licht wird weiterhin durch das an der Farblackschicht gestreute Licht überlagert, wodurch der Beugungseffekt abgeschwächt wird. Die Abstimmung zwischen dem, an der Grenzfläche zwischen der mindestens einen Farblackschicht und der Replizierschicht gebeugten Licht und dem, von der mindestens einen Farblackschicht rückgestreuten Licht ermöglicht die Ausbildung des latenten optisch variablen Effekts. Dabei sind für die Farbgebung der mindestens einen Farblackschicht prinzipiell alle Farben verwendbar, jedoch ist die Überlagerung des gebeugten Lichts mit dem rückgestreuten Licht umso schwächer, desto stärker die Farblackschicht einfallendes Licht absorbiert.

Eine erfindungsgemäße Folie hat den Vorteil, dass einem Betrachter bei Betrachtung der Folie aus einem gewissen Abstand und/oder bei oberflächlicher Betrachtung nicht das Vorhandensein einer fälschungssicheren oder besonders attraktiven Folie vermittelt wird, sondern lediglich das Vorhandensein einer einfachen farbigen Beschichtung. Erst bei genauerer Inspektion der Folie in einem geringen Abstand zur Folie und/oder unter spezieller Beleuchtung der Folie bzw. verstärkt durch eine spezielle Beleuchtung der Folie, werden die durch die diffraktive Reliefstruktur erzeugten optisch variablen Effekte eindeutig erkennbar, wobei hier von Beugungseffekten auszugehen ist, die im Vergleich zur starken Farbwirkung der pigmentierten Farblackschicht eher wenig auffallen bzw. relativ schwach aufleuchten.

Die Helligkeit L* der eingesetzten Farblackschicht wird dabei insbesondere mittels des Meßsystems CIE-LAB Datacolor SF 600 bestimmt, das auf einem Spektralphotometer basiert. Bei der farbmetrischen Bestimmung von Farbabständen bei Körperfarben nach der CIELAB-Formel L*a*b* steht der Wert L* für die Hell/Dunkel - Achse, der Wert a* für die Rot/Grün - Achse und der Wert b* für die Gelb/Blau - Achse. Der L*a*b* - Farbraum wird somit als dreidimensionales Koordinatensystem beschrieben, wobei die L* Achse die Helligkeit beschreibt und einen Wert zwischen 0 und 100 annehmen kann.

Die Messung der Helligkeit L* erfolgte hier unter folgenden Bedingungen:

| | |
|---|---|
| Messgeometrie: | diffus / 8° nach DIN 5033 und ISO 2496 |
| Durchmesser Messöffnung: | 26 mm |
| Spektralbereich: | 360 - 700 nm nach DIN 6174 |
| Normlichtart: | D65 |

Als Lichtquellen zur Beleuchtung der erfindungsgemäßen Folie und zur Sichtbarmachung des optisch variablen Effekts eigenen sich insbesondere Punktlichtquellen in Form von Taschenlampen, Halogenstrahlern oder KFZ-Scheinwerfern. Aber auch direkt eingestrahltes Sonnenlicht ist als Lichtquelle gegebenenfalls geeignet.

Bevorzugte Ausgestaltungen der Folie sind nachfolgend beschrieben.

Als Farblackschicht werden hierbei nicht nur aus farbigen Lacken gebildete Schichten verstanden, sondern auch farbige Klebstoff- oder Kunststoffschichten. Die mindestens eine Farblackschicht wird auf die Replizierschicht insbesondere aufgebracht, indem sie aufgedruckt, aufgegossen, aufgerakelt, aufgesprüht, aufextrudiert usw. wird.

Die Schichtdicke einer Farblackschicht liegt bei der Erfindung im Bereich von 1 μm bis 50 μm, vorzugsweise im Bereich von 2 μm bis 10 μm.

Zur Bildung einer Replizierschicht werden bevorzugt Lackschichten, insbesondere aus strahlungsvernetzenden Lacken (wie UV-Lacken) oder thermisch vernetzenden Lacken, eingesetzt. Aber auch thermoplastische Kunststoffe oder herkömmliche positive oder negative Photoresiste können eingesetzt werden.

Die Schichtdicke einer Replizierschicht liegt insbesondere im Bereich von 0,1 μm bis 50 μm, vorzugsweise im Bereich von 0,2 μm bis 1 μm. Die Replizierschicht kann aber auch als selbsttragende Trägerfolie für den Auftrag weiterer Schichten, wie der mindestens einen Farblackschicht, dienen und weitaus dicker, z.B. im Bereich von bis zu 3 mm Dicke, ausgebildet sein.

Die Reliefstruktur wird je nach Materialauswahl für die Replizierschicht insbesondere mittels eines an seiner Oberfläche entsprechend profilierten Werkzeugs, wie einem Stempel oder einer Walze, eines lithographischen Verfahrens oder einer Laserablation in die Replizierschicht eingebracht. Eine mögliche Variante ist durch eine UV-Replikation gegeben, bei der ein profiliertes transparentes Werkzeug in Kontakt zu einer Replizierschicht aus UV-Lack gebracht wird und gleichzeitig eine Aushärtung des UV-Lacks mittels einer UV-Strahlungsquelle erfolgt. Besonders bevorzugt ist ein thermisches Replizieren, bei dem ein beheiztes profiliertes Werkzeug in Kontakt zu einer Replizierschicht aus thermoplastischem Material gebracht wird.

So hat es sich für die Folie bewährt, wenn die Pigmentierung der mindestens einen Farblackschicht so gewählt ist, dass eine Pigmentierungszahl PZ im Bereich von 1,5 bis 120 cm$^3$/g, insbesondere im Bereich von 5 bis 120 cm$^3$/g, liegt, wobei sich die Pigmentierungszahl PZ errechnet nach

$$PZ = \sum_{1}^{x} \frac{(m_P \times f)_x}{(m_{BM} + m_A)} \qquad \text{und} \qquad f = \frac{\ddot{O}Z}{d} \quad ,$$

wobei gilt:

$m_P$ = Masse eines Pigments in der Farblackschicht in g,

$m_{BM}$ = konstant; Masse eines Bindemittels in der Farblackschicht in g,

$m_A$ = konstant; Masse Festkörper der Additive in der Farblackschicht in g,

$\ddot{O}Z$ = Ölzahl eines Pigments (nach DIN 53199),

$d$ = Dichte eines Pigments (nach DIN 53193),

$x$ = Laufvariable, entsprechend der Anzahl an unterschiedlichen Pigmenten in der Farblackschicht.

Auf diese Weise lassen sich ausgehend von einer als geeignet befundenen Zusammensetzung einer Farblackschicht schnell und unkompliziert dazu abweichende weitere mögliche Pigmentierungen errechnen.

Es hat sich als vorteilhaft erwiesen, wenn eine Pigmentierung der mindestens einen Farblackschicht so gewählt ist, dass eine Transmission τ von sichtbarem Licht durch die mindestens eine Farblackschicht < 75% beträgt.

Die Transmission τ, d.h. der Transmissionsgrad der mindestens einen Farblackschicht, wird insbesondere mit einem Spektralphotometer bestimmt, beispielsweise vom Typ Hitachi U-2000, wobei in einem Wellenlängenbereich zwischen 360 und 700 nm gemessen wird.

Je größer die Transmission τ der pigmentierten Farblackschicht ausgebildet ist, umso schwächer ausgeprägt ist der optisch variable Effekt und desto geringer ist seine Erkennbarkeit.

Weiterhin hat es sich als günstig erwiesen, wenn die Transmission τ von sichtbarem Licht durch die mindestens eine Farblackschicht im Bereich von 1 bis 75 %, insbesondere im Bereich von 1 bis 50 %, besonders bevorzugt im Bereich von 1 bis 25 %, liegt.

Es ist von besonderem Vorteil, wenn für den Betrachter bei Betrachtung der Folie auf der, der diffraktiven Reliefstruktur abgewandten Seite der Replizierschicht unter Normalbeleuchtung in einem ersten Abstand von maximal etwa 0,5 m zur Folie und zusätzlich unter Beleuchtung der Folie mit einer geeigneten Lichtquelle, der durch die diffraktive Reliefstruktur erzeugte, optisch variable Effekt erkennbar ist. Die Verwendung einer einfachen und für jedermann verfügbaren Punktlichtquelle, beispielsweise in Form einer Taschenlampe, eignet sich zur einfachen und kostengünstigen Kontrolle der Echtheit der Folie auch durch eine ungeschulte Person.

Der von der diffraktiven Reliefstruktur latent erzeugte, optisch variable Effekt äußert sich insbesondere darin, dass die Folie aus unterschiedlichen Betrachtungswinkeln gesehen unterschiedliche Farben und/oder unterschiedliche Bildmotive und/oder unterschiedliche alphanumerische Zeichen und/oder unterschiedliche Mattierungen und dergleichen zeigt. Besonders bevorzugt sind dabei optisch variable Elemente ausgebildet, die in Form von Hologrammen, holographischen Darstellungen mit kinematischem Effekt, Linsenelementen oder Mattstrukturen, die mittels der diffraktiven Reliefstruktur erzeugt werden, vorliegen. Auch mittels Linear- oder Kreuzgittern erzeugte optisch variable Elemente haben sich bewährt.

Eine diffraktive Reliefstruktur wird insbesondere durch Parameter wie Spatialfrequenz, Azimut, Profilform, Profilhöhe h usw. bestimmt. Dabei kann eine Folie zwei oder mehr unterschiedliche Typen von diffraktiven Reliefstrukturen enthalten, die sich hinsichtlich dieser Parameter unterscheiden.

Generell eigenen sich als diffraktive Reliefstrukturen symmetrische oder asymmetrische Reliefstrukturen, insbesondere mit einem sinusförmigen, rechteckförmigen, sägezahnförmigen usw. Profil, Dabei kann die Reliefstruktur ein Beugungsgitter ausbilden, wie ein Lineargitter, ein Kreuzgitter, ein Blaze-Gitter, eine Linsenstruktur umfassend konzentrische oder nicht konzentrische Ringstrukturen und dergleichen.

Die Spatialfrequenz eines Beugungsgitters wird vorzugsweise im Bereich von 50 bis 4000 Linien/mm gewählt, wobei ein Bereich von 100 Linien/mm bis etwa 3000 Linien/mm bevorzugt ist.

Die geometrische Profilhöhe h einer diffraktiven Reliefstruktur weist, im Querschnitt der Replizierschicht gesehen, insbesondere einen Wert im Bereich von 50 bis 5000 nm auf, wobei Vorzugswerte im Bereich von 75 bis 2000 nm liegen. Die Profilhöhe h wird dabei bestimmt, indem die Höhendifferenz zwischen dem höchsten Punkt und dem dazu benachbarten tiefsten Punkt einer Reliefstruktur ermittelt wird. Der höchste Punkt ist dabei sozusagen durch die Spitze eines Berges und der tiefste Punkt durch die Sohle eines Tals definiert, welche die Reliefstruktur ausbildet.

Es ist auch der Einsatz von diffraktiven Reliefstrukturen möglich, die ein komplexes Oberflächenprofil mit lokal unterschiedlichen Profilhöhen aufweisen. Bei derartigen Oberflächenprofilen kann es sich auch um stochastische Oberflächenprofile, die beispielsweise Mattstrukturen ausbilden, handeln.

Mattstrukturen besitzen im mikroskopischen Maßstab feine Reliefstrukturelemente, die das Streuvermögen bestimmen und nur mit statistischen Kenngrößen beschrieben werden können, wie z.B. Mittenrauhwert Ra, Korrelationslänge lc usw., wobei die Werte für den Mittenrauhwert Ra im Bereich von 20 nm bis 5000 nm liegen, mit Vorzugswerten im Bereich von 50 nm bis 1000 nm, während die Korrelationslänge lc in wenigstens einer Richtung Werte im Bereich von 200 nm bis 50000 nm, vorzugsweise im Bereich von 500 nm bis 10000 nm, aufweist.

Die mikroskopisch feinen Reliefstrukturelemente einer isotropen Mattstruktur weisen keine azimutale Vorzugsrichtung auf, weshalb das gestreute Licht mit einer Intensität grösser als ein vorbestimmter Grenzwert, z.B. durch die visuelle Erkennbarkeit vorgegeben, in einem durch das Streuvermögen der Mattstruktur vorbestimmten Raumwinkel in allen azimutalen Richtungen gleichmässig verteilt ist und das Flächenelement im Tageslicht weiß bis grau erscheint. Bei einer Veränderung des Kippwinkels weg von der Vertikalen erscheint das Flächenelement dunkel. Stark streuende Mattstrukturen verteilen das gestreute Licht in einen größeren Raumwinkel als schwach streuende Mattstrukturen. Falls die Reliefelemente der Mattstruktur eine Vorzugsrichtung haben, wie beispielsweise asymmetrische Mattstrukturen, so weist das gestreute Licht eine anisotrope Verteilung auf.

Wie bereits oben ausgeführt, sind bei hellen, stark streuenden Farblackschichten die Beugungseffekte aufgrund des rückgestreuten Lichts vergleichsweise schwach zu sehen, während bei dunklen, stark absorbierenden Farben die Beugungseffekte stark zu sehen sind, da kaum Licht an der Farblackschicht rückgestreut wird. So wird die Erkennbarkeit des latenten optisch variablen Effekts bei Verwendung einer hell pigmentierten Farblackschicht durch das an der mindestens einen Farblackschicht in Richtung des Betrachters rückgestreute Licht unter Umständen so stark beeinträchtigt, dass der optisch variable Effekt nur noch unter ganz bestimmten Blickwinkeln oder bei spezieller Beleuchtung und/oder Beleuchtungsstärke latent zutage tritt. Es hat sich daher bewährt, wenn mit steigender Helligkeit L* der mindestens einen Farblackschicht der Betrag der Differenz der Imaginärteile der Brechungsindizes $n_1$ und $n_2$ proportional zunimmt. Das bedeutet, dass bei Verwendung einer dunkel gefärbten Farblackschicht die Imaginärteile der Brechungsindizes der Farblackschicht und der Replizierschicht relativ nahe beisammen liegen können, ohne dass die Erkennbarkeit des latenten optisch variablen Effekts der Folie, aus geringem Abstand und ggf. unter spezieller Beleuchtung betrachtet, beeinträchtigt ist. Bei Verwendung einer hell eingefärbten Farblackschicht hat es sich dagegen als vorteilhaft erwiesen, wenn die Imaginärteile der Brechungsindizes der Farblackschicht und der Replizierschicht nicht so nahe beisammen liegen, damit die Erkennbarkeit des latenten optisch variablen Effekts der Folie, aus geringem Abstand und ggf. unter spezieller Beleuchtung betrachtet, gegeben ist.

Es hat sich bewährt, wenn bei einer Helligkeit L* der mindestens einen Farblackschicht im Bereich von 0 bis etwa 50, welche einem dunklen Farbton entspricht, der Betrag der Differenz der Imaginärteile der Brechungsindizes $n_1$ und $n_2$ im Bereich von 0,05 bis 0,7 liegt und wenn bei einer Helligkeit L* der mindestens einen Farblackschicht im Bereich von etwa 50 bis 90, welche einem hellen Farbton entspricht, der Betrag der Differenz der Imaginärteile der Brechungs- indizes $n_1$ und $n_2$ im Bereich von 0,3 bis 0,7 liegt.

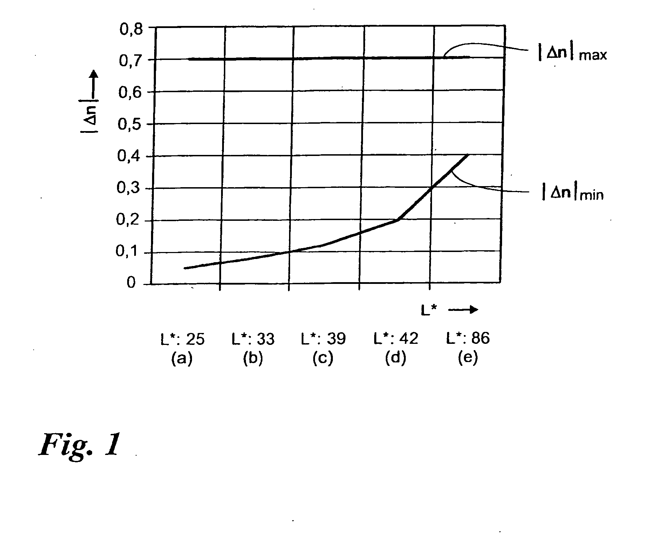

Der für die Folie bevorzugte Zusammenhang zwischen der Helligkeit L* einer Farblackschicht und dem Betrag einer Differenz der Imaginärteile der Brechungsindizes $n_1$ und $n_2$ ist in Figur 1 beispielhaft dargestellt.

Die Folie kann weitere Sicherheitsmerkmale bereitstellen, um deren Fälschungssicherheit noch zu erhöhen. So hat es sich bewährt, wenn die Folie einen maschinenlesbaren Code enthält. Ein Code wird bevorzugt eingesetzt, um Informationen in codierter Form auf der Folie unterzubringen, welche beispielsweise zu Überwachungszwecken ausgewertet werden können.

So ist es beispielsweise möglich, die alphanumerischen Zeichen einer Kennzeichenlegende eines KFZ-Nummernschilds, beispielsweise betreffend den Zulassungsort, mittels eines geheimen Verschlüsselungsalgorithmus zu verschlüsseln und das Ergebnis dieser Verschlüsselung als Code zu verwenden. Im Rahmen einer polizeilichen Überprüfung kann dann beispielsweise festgestellt werden, ob der vorhandene Code tatsächlich die zur kontrollierten Kennzeichenlegende gehörigen Informationen des KFZ-Nummernschilds enthält.

Als Informationen können auch sicherheitsrelevante Daten, wie im Fall des KFZ-Nummernschilds beispielsweise Angaben zum Halter des Kraftfahrzeugs oder dem Kraftfahrzeug selbst, codiert werden. Dadurch werden die Daten dem Zugriff der Öffentlichkeit entzogen. Im Rahmen einer polizeilichen Kontrolle kann dann die enthaltene Information mittels geeigneter Vorrichtungen decodiert und ausgewertet werden.

Der maschinenlesbare Code kann beispielsweise von der diffraktiven Reliefstruktur bereitgestellt werden und beispielsweise in Form eines ein- oder zweidimensionalen Barcodes, eines Mikrotexts usw. vorliegen.

Der maschinenlesbare Code kann zudem oder alternativ auch über die Pigmentierung der mindestens einen Farblackschicht bereitgestellt werden, indem diese beispielsweise partiell unterschiedlich und/oder mit besonderen Eigenschaften ausgebildet wird. So kann eine einzelne Farblackschicht leitfähige Pigmente und/oder magnetische Pigmente und/oder lumineszierende Pigmente und/oder thermochrome Pigmente usw. aufweisen, die den Code bereitstellen oder ergänzen.

Ein Einsatz mehrerer unterschiedlicher Farblackschichten nebeneinander auf der transparenten Replizierschicht ist ohne weiteres möglich. So können unterschiedliche Farblackschichten in jeglicher Kombination zueinander verwendet werden. Dabei können unterschiedliche Farblackschichten unterschiedliche Pigmente aus Materialien enthalten, die unterschiedlich gefärbt sind oder die gleich gefärbt sind, jedoch anderweitig unterscheidbar sind. So können gleich gefärbte Farblackschichten sich durch spezielle Pigmente unterscheiden, die erst unter speziellen Bedingungen erkannt werden können, wie beispielsweise lumineszierende Pigmente, magnetische Pigmente, elektrisch leitende Pigmente, thermochrome Pigmente usw.

Dabei kann eine erste Farblackschicht lediglich farbige Pigmente aufweisen und eine weitere Farblackschicht gleich eingefärbt sein, aber zudem mindestens ein spezielles Pigment enthalten. Zwei gleich eingefärbte Farblackschichten können jeweils spezielle Pigmente enthalten, die sich in ihren Eigenschaften unterscheiden, wie einer Anregungswellenlänge, den magnetischen Eigenschaften und dergleichen.

In der mindestens einen Farblackschicht sind alle Farbpigmente einsatzbar, die üblicherweise im Tiefdruck eingesetzt werden. Diese weisen üblicherweise einen Partikeldurchmesser im Bereich von 20 nm bis 5 $\mu$m auf.

Bei Verwendung unterschiedlicher Farblackschichten ist eine Bildung anspruchsvoller Muster, beispielsweise in Form von Guillochen, Mikroschrift, Symbolen, Logos, ein- und zweidimensionalen Barcodes und ähnlichem möglich. Diese Muster können bei Normalbeleuchtung sichtbar sein und/oder unter speziellen Bedingungen, wie UV-Bestrahlung, Erwärmung, usw., erkennbar werden.

Es hat sich bewährt, wenn senkrecht zur Ebene der transparenten Replizierschicht gesehen mindestens zwei unterschiedliche Farblackschichten in unterschiedlichen Bereichen der diffraktiven Reliefstruktur angeordnet sind, welche sich in ihren Brechungsindizes und/oder in ihrer Helligkeit L* und/oder in ihrer Pigmentierungszahl PZ und/oder in ihrer Transmission $\tau$ unterscheiden. Dadurch können Bereiche, insbesondere musterförmige Bereiche, geschaffen werden, in welchen der latente optisch variable Effekte der diffraktiven Reliefstruktur bei Betrachtung aus der Nähe stärker zutage tritt als in dazu benachbarten Bereichen.

Weiterhin hat es sich bewährt, wenn senkrecht zur Ebene der transparenten Replizierschicht gesehen mindestens in einem Bereich der transparenten Replizierschicht, insbesondere in einem Bereich der diffraktiven Reliefstruktur, mindestens eine weitere farbige oder farblose Lackschicht angeordnet ist, deren Brechungsindex $n_3$ sich vom Brechungsindex $n_1$ der transparenten Replizierschicht nicht oder um weniger als 0,05 unterscheidet. Eine derartige farbige oder farblose Lackschicht bewirkt eine vollständige Auslöschung des optisch variablen Effekts der diffraktiven Reliefstruktur, da an der Grenzfläche zwischen der Replizierschicht und der farbigen oder farblosen Lackschicht das einfallende Licht nicht oder nicht in ausreichender Menge gebrochen wird.

Es lassen sich damit Folien erzeugen, die den latenten optisch variablen Effekt lediglich in musterförmigen Bereichen, also lediglich bereichsweise, zeigen, obwohl die Reliefstruktur überall vorhanden ist. Dabei kann ein Umriss der musterförmigen Bereiche, in denen der latente optisch variable Effekt vorhanden ist, ein weiteres auslesbares Sicherheitsmerkmal der Folie bilden.

Alternativ kann die Reliefstruktur lediglich in Bereichen der Replizierschicht vorhanden sein, um den gleichen Effekt zu erzielen.

Die Folie ist insbesondere als selbsttragende Laminierfolie oder als Transferfolie ausgebildet, die eine Trägerfolie und eine davon ablösbare Übertragungslage umfassend die Replizierschicht und die mindestens eine Farblackschicht aufweist. Eine Laminierfolie weist insbesondere eine transparente Trägerfolie auf, auf der die Replizierschicht, die mindestens eine Farblackschicht und optional eine Kleberschicht angeordnet werden. Ist die Replizierschicht selbsttragend ausgebildet, so kann die Laminierfolie aber auch lediglich die Replizierschlcht, die mindestens eine Farblackschicht und optional die Kleberschicht umfassen. Trägerfolien sind dabei üblicherweise in einer Schichtdicke im Bereich von 4,5 μm bis 100 μm, vorzugsweise im Bereich von 12 μm bis 50 μm ausgebildet.

Ein Verfahren zur Herstellung einer erfindungsgemäßen Folie weist folgende Schritte auf: Ausbilden der transparenten Replizierschicht mit dem Brechungsindex $n_1$, Ausbilden der diffraktiven Reliefstruktur auf einer Seite der Replizierschicht, Ausbilden der mindestens einen pigmentierten Farblackschicht mit dem Brechungsindex $n_2$ und der Helligkeit L* auf der Replizierschicht und unmittelbar angrenzend an die diffraktive Reliefstruktur mittels mindestens einer pigmentierten Zusammensetzung, wobei die mindestens eine pigmentierte Zusammensetzung in fließfähigem Zustand aufgebracht wird und dabei die Replizierschicht nicht beeinträchtigt.

Die pigmentierte Zusammensetzung ist insbesondere so ausgebildet, dass sie die Replizierschicht weder angreift, anlöst oder auflöst, so dass die Reliefstruktur unverändert erhalten bleibt. Die Zusammensetzung zur Bildung der mindestens einen Farblackschicht kann so die in der Replizierschicht gebildete diffraktive Reliefstruktur weder auslöschen, verrunden oder in einer anderer Weise beeinträchtigen. Die Profilform der Reliefstruktur bleibt einwandfrei erhalten.

Dabei wird die mindestens eine Farblackschicht auf einer verfestigten Replizierschicht gebildet, in welcher die diffraktive Reliefstruktur abgeformt ist. Ob die Verfestigung der Replizierschicht dabei durch einen chemischen Aushärteprozess, durch Abkühlen oder durch eine einfache Trocknung, gegebenenfalls unter Luft-und/oder Wärmezufuhr, erfolgt ist, gegebenenfalls unter gleichzeitiger Bildung der Reliefstruktur, ist dabei nicht von Bedeutung.

Bevorzugt wird die transparente Replizierschicht durch einen transparenten Replizierlack in Form eines thermoplastischen Lacks, eines thermisch vernetzenden Lacks oder eines chemisch vernetzenden Lacks, insbesondere eines UVvernetzenden Lacks oder eines 2-Komponenten-Lacksystems umfassend ein Harz und einen Härter, gebildet.

Es ist bevorzugt, wenn eine pigmentierte Zusammensetzung zur Bildung einer Farblackschicht aus einem pigmentierten Farblack folgender Zusammensetzung gebildet wird:

| | |
|---|---|
| 0 - 50 Gew.-% | Wasser |
| 1 - 10 Gew.-% | organisches Lösungsmittel oder Lösungsmittelgemisch |
| 1 - 40 Gew,-% | Farbpigment(e) |
| 0,1 - 5 Gew.-% | Additiv zur Stabilisierung der Pigment-Dispersion/Emulsion |
| 0,5 - 10 Gew.-% | Dispergieradditiv |
| 0,5 - 10 Gew.-% | anorganischer Füllstoff oder Füllstoffgemisch |
| 25 - 90 Gew.-% | Polymer-Dispersion und/oder Polymer-Emulsion und/oder Polymer-Lösung |

Insbesondere wird der pigmentierte Farblack mit folgender Zusammensetzung ausgebildet:

| | |
|---|---|
| 25 - 35 Gew.-% | Wasser |
| 4 - 8 Gew.-% | organisches Lösungsmittel oder Lösungsmittelgemisch |
| 5 - 10 Gew.-% | Farbpigment(e) |
| 0,5 - 1 Gew.-% | Additiv zur Stabilisierung der |

(fortgesetzt)

| | Pigment-Dispersion/Emulsion |
|---|---|
| 0,5 - 2 Gew.-% | Dispergieradditiv |
| 0,5 - 3 Gew.-% | anorganischer Füllstoff oder Füllstoffgemisch |
| 35 - 60 Gew.-% | Polymer-Dispersion und/oder Polymer-Emulsion und/oder Polymer-Lösung |

Die Polymer-Dispersion und/oder Polymer-Emulsion und/oder Polymer-Lösung fungiert hierbei insbesondere als Filmbildner.

Dabei hat es sich bewährt, wenn als Polymer-Emulsion eine Acrylat-Polymer-Emulsion, eine Acrylat-Copolymer-Emulsion oder eine anionische Acrylat-Copolymer-Emulsion verwendet wird.

Weiterhin hat es sich bewährt, wenn als Polymer-Dispersion eine PolyurethanDispersion oder eine Polyesterharz-Dispersion oder eine Vinylacetat-EthylenCopolymer-Dispersion verwendet wird.

Als Polymer-Lösung wird bevorzugt ein wasserlösliches oder wasserverdünnbares Harnstoffharz in Wasser gelöst oder verdünnt eingesetzt, wobei das Harz auch in Wasser und organischem Lösungsmittel gelöst oder mit Wasser und organischem Lösungsmittel verdünnt eingesetzt werden kann. Aber auch andere filmbildende Polymer-Lösungen, auf Wasserbasis und/oder auf Lösemittelbasis, sind verwendbar.

Insbesondere die Verwendung einer Emulsion oder einer Dispersion mit einem Festkörperanteil von mindestens 30 Gew.-% und einer Dichte d im Bereich von 1,01 bis 1,1 g/cm$^3$ hat sich bewährt.

Zur Bildung des pigmentierten Farblacks hat sich als Filmbilder insbesondere eine Acrylat-Copolymer-Emulsion mit einem Festkörperanteil von 38 %, einer Dichte von 1,05 g/cm$^3$ und einer Glasübergangstemperatur $T_g$ von etwa 15°C als geeignet erwiesen.

Alternativ kommen alle Filmbildner in Frage, die aufgrund ihrer Formulierung die Replizierschicht nicht beeinträchtigen und eine ausreichende Haftung an der Replizierschicht ausweisen, wie z.B. Systeme auf Wasserbasis, UV-härtende Systeme usw. Auch Systeme auf Lösungsmittelbasis können verwendet werden, sofern eine Replizierschicht aus einem vernetzen Kunststoff gebildet ist.

Eine Verwendung einer erfindungsgemäßen Folie zur Beschichtung von Kraftfahrzeugkennzeichen unter Ausbildung der Kennzeichenlegende, welche alphanumerische Zeichen enthält, ist ideal.

Aber auch eine Verwendung einer erfindungsgemäßen Folie zur Beschichtung von Verpackungen, von Kunststoffteilen für den KFZ-Innenraum, von Möbeln und von Wertdokumenten, wie Bankkarten, Tickets oder Lotterielosen, hat sich bewährt. Bei Bankkarten, wie EC-Katen oder Kreditkarten, welche einen Magnetstreifen aufweisen, wird bevorzugt der Magnetstreifen durch eine Folie ausgebildet.

Die Figuren 1 bis 6 sollen die Erfindung beispielhaft erläutern. So zeigt

Figur 1     ein Diagramm zum bevorzugten Zusammenhang zwischen der Helligkeit L* einer Farblackschicht und dem Betrag der Differenz Δn der Brechungsindizes einer Replizierschicht und einer Farblackschicht, hier entsprechend der Differenz der Imaginärteile der Brechungsindizes;

Figur 2     eine erste Folie im Querschnitt;

Figur 3     eine zweite Folie in Form einer Laminierfolie im Querschnitt;

Figur 4     eine dritte Folie in Form einer Transferfolie im Querschnitt;

Figur 5     einen Querschnitt Y - Y' durch ein KFZ-Nummernschild gemäß Figur 6; und

Figur 6     ein KFZ-Nummernschild in der Draufsicht.

Figur 1 zeigt ein Diagramm zum bevorzugten Zusammenhang zwischen der Helligkeit L* einer Farblackschicht und dem Betrag der Differenz der Brechungsindizes Δn einer Replizierschicht und einer Farblackschicht. In diesem Beispiel sind der Realteil des Brechungsindex $n_1$ der Farblackschicht und des Realteils des Brechungsindex $n_2$ der Replizierschicht gleich groß, so dass die Realteile der Brechungsindizes $n_1$, $n_2$ vernachlässigt werden können und der Betrag von Δn im Diagramm lediglich die Differenz der Imaginärteile der Brechungsindizes $n_1$, $n_2$ angibt. Die Helligkeit L* ist für unterschiedlich farbig pigmentierte Farblackschichten (a) bis (e) angegeben.

Dabei stehen die Buchstaben (a) bis (e) in Figur 1 für unterschiedlich gefärbte Farblackschichten:

(a) = schwarze oder graue Farblackschicht mit Helligkeit L* im Bereich von 0 - 50

(b) = blaue Farblackschicht mit Helligkeit L* im Bereich von 10 - 90

(c) = rote Farblackschicht mit Helligkeit L* im Bereich von 20 - 90

(d) = grüne Farblackschicht mit Helligkeit L* im Bereich von 10 - 90

(e) = gelbe Farblackschicht mit Helligkeit L* im Bereich von 50 - 90

Der Wert | Δn |, d.h. der Betrag der Differenz der Imaginärteile des Brechungsindex $n_1$ der Replizierschicht und des Brechungsindex $n_2$ einer pigmentierten Farblackschicht, bewegt sich für eine schwarze Farblackschicht (a) bevorzugt im Bereich von 0,05 bis 0,7.

Das bedeutet, dass bei einer schwarz pigmentierten Farblackschicht der latente optisch variable Effekt auch dann noch zu erkennen ist, wenn sich die Imaginärteile der Brechungsindizes von Replizierschicht und Farblackschicht um lediglich 0,05 unterscheiden. Je heller die pigmentierte Farblackschicht eingefärbt ist, desto größer sollte der Wert | Δn | gewählt werden, damit der latente optisch variable Effekt noch problemlos mit dem bloßen Auge erkennbar ist.

Dies wird durch den Verlauf der Kurve | Δn |$_{min}$ über die Helligkeit L* der Farblackschicht mit einer Einfärbung von Schwarz (a) über Blau (b), Rot(c), Grün (d) nach Gelb (e) deutlich.

So steigt die Kurve | Δn |$_{min}$ mit steigender Helligkeit L* der Farblackschicht an. Bei einer gelb eingefärbten Farblackschicht liegt der Wert | Δn | im Bereich von 0,4 bis 0,7.

Dies bedeutet, dass die Imaginärteile der Brechungsindizes von Replizierschicht und gelber Farblackschicht um mindestens 0,4 unterschiedlich gewählt werden sollten, damit der latente optisch variable Effekt zu erkennen ist und nicht durch das von der gelben Farblackschicht in Richtung des Betrachters rückgestreute Licht unkenntlich oder nur noch schlecht wahrnehmbar gemacht wird.

Nachfolgend sind Beispiele für Zusammensetzungen zur Bildung einer Replizierschicht und verschieden eingefärbter Farblackschichten (a) bis (e) angegeben.

Die Replizierschicht ist beispielsweise aus einem Lack folgender Zusammensetzung gebildet worden (in g):

| | |
|---|---|
| 17000 | Methylethylketon |
| 1000 | Diacetonalkohol |
| 1500 | Acrylpolymer auf Basis von Methylmethacrylat (Dichte d = 1,19 g/cm³) |
| 2750 | mit denaturiertem Ethanol befeuchtetes Cellulosenitrat, 65%, (Dichte d = 1,25 g/cm³) |
| 1500 | Polyisocyanat auf Basis Isophorondiisocyanat |

Farblack zur Bildung einer schwarzen Farblackschicht (a) mit minimaler Pigmentierung (in g):

| | |
|---|---|
| 2500 | Wasser |
| 2500 | organisches Lösungsmittel Isopropylalkohol |
| 200 | basisches Additiv 25 % in Wasser (flüchtig) |
| 400 | Dispergieradditiv, Festkörper: 40 % |
| 200 | Füllstoff Siliziumdioxid, mittlere Teilchengröße: 16 nm |
| 100 | Füllstoff Siliziumdioxid, mittlere Teilchengröße: 7,5 μm |
| 50 | Pigment Kohlenstoffschwarz, Dichte d = 1,8 g/cm³, ÖZ = 230 |
| 2500 | Bindemittel I: Acrylat-Copolymer-Emulsion, Festkörper: 37,5 % |
| 4000 | Bindemittel II: Acrylat-Copolymer-Emulsion, Festkörper: 55 % |

Dabei gilt für diesen schwarzen Farblack:

$$PZ = \sum_{1}^{z} \frac{(m_P \times f)_x}{(m_{BM} + m_A)} = \frac{50g \times 127,8 \frac{cm^3}{g}}{3137,5g + 160g} = 1,9 \frac{cm^3}{g}$$

mit $m_p$ = 50 g Kohlenstoffschwarz

f = ÖZ/d = 230/1,8 g/cm³ = 127,8 cm³/g (für Kohlenstoffschwarz)

$m_{BM}$ = (0,375 * 2500 g Bindemittel I) + (0,55 * 4000 g Bindemittel II) = = 937,5 g Bindemittel I + 2200 g Bindemittel II = 3137,5 g Bindemittel

$m_A$ = 0,4 * 400 g Dispergieradditiv-= 160 g Festkörper des Dispergieradditivs

Farblack zur Bildung einer schwarzen Farblackschicht (a) mit maximaler Pigmentierung (in g):

| | |
|---|---|
| 2500 | Wasser |
| 2500 | organisches Lösungsmittel Isopropylalkohol |
| 200 | basisches Additiv 25 % in Wasser (flüchtig) |
| 400 | Dispergieradditiv, Festkörper: 40 % |
| 200 | Füllstoff Siliziumdioxid, mittlere Teilchengröße: 16 nm |
| 100 | Füllstoff Siliziumdioxid, mittlere Teilchengröße: 7,5 $\mu$m |
| 2500 | Pigment Kohlenstoffschwarz, Dichte d = 1,8 g/cm³, ÖZ = 230 |
| 2500 | Bindemittel I: Acrylat-Copolymer-Emulsion, Festkörper: 37,5 % |
| 4000 | Bindemittel II: Acrylat-Copolymer-Emulsion, Festkörper: 55 % |

Dabei gilt für diesen schwarzen Farblack:

$$PZ = \sum_{1}^{x} \frac{(m_P \times f)_x}{(m_{BM} + m_A)} = \frac{2500g \times 127{,}8 \frac{cm^3}{g}}{3137{,}5g + 160g} = 96{,}9$$

mit $m_p$ = 2500 g Kohlenstoffschwarz

f = ÖZ/d = 230/1,8 g/cm³= 127,8 cm³/g (für Kohlenstoffschwarz)

$m_{BM}$ = (0,375 * 2500 g Bindemittel I) + (0,55 * 4000 g Bindemittel II) = = 937,5 g Bindemittel I + 2200 g Bindemittel II = 3137,5 g Bindemittel

$m_A$ = (0,4 * 400 k Dispergieradditiv) = 160 g Festkörper des Dispergieradditivs

Farblack zur Bildung einer blauen Farblackschicht (b) (in g):

$$L^* = 33{,}58 \qquad a^* = 0{,}54 \qquad b^* = -30{,}23$$

| | |
|---|---|
| 2500 | Wasser |
| 2500 | organisches Lösungsmittel Isopropylalkohol |
| 200 | basisches Additiv 25 % in Wasser (flüchtig) |
| 400 | Dispergieradditiv, Festkörper: 40 % |
| 200 | Füllstoff Siliziumdioxid, mittlere Teilchengröße: 16 nm |
| 100 | Füllstoff Siliziumdioxid, mittlere Teilchengröße: 7,5 $\mu$m |
| 1200 | Phthalocyaninblau-Pigment, Dichte d = 1,5 g/cm³, ÖZ = 43 |
| 2500 | Bindemittel I: Acrylat-Copolymer-Emulsion, Festkörper: 37,5 % |
| 4000 | Bindemittel II: Acrylat-Copolymer-Emulsion, Festkörper: 55 % |

Dabei gilt für diesen blauen Farblack:

$$PZ = \sum_{1}^{x} \frac{(m_P \times f)_x}{(m_{BM} + m_A)} = \frac{1200g \times 28{,}7 \frac{cm^3}{g}}{3137{,}5g + 160g} = 10{,}4$$

mit mp = 1200 g Phthalocyaninblau-Pigment

f = ÖZ/d = 43/1,5 g/cm³ = 28,7 cm³/g (für Phthalocyaninblau-Pigment)

$m_{BM}$ = (0,375 * 2500 g Bindemittel I) + (0,55 * 4000 g Bindemittel II) = = 937,5 g Bindemittel I + 2200 g Bindemittel II = 3137,5 g Bindemittel

$m_A$ = (0,4 * 400 g Dispergieradditiv) = 160 g Festkörper des Dispergieradditivs

Farblack zur Bildung einer roten Farblackschicht (c) (in g):

$$L^* = 38,43 \qquad a^* = 44,23 \qquad b^* = 20,44$$

| | |
|---|---|
| 2500 | Wasser |
| 2500 | organisches Lösungsmittel Isopropylalkohol |
| 200 | basisches Additiv 25 % in Wasser (flüchtig) |
| 400 | Dispergieradditiv, Festkörper: 40 % |
| 200 | Füllstoff Siliziumdioxid, mittlere Teilchengröße: 16 nm |
| 100 | Füllstoff Siliziumdioxid, mittlere Teilchengröße: 7,5 μm |
| 1200 | Diketo-Pyrrolo-Pyrrol-Pigment, Dichte d = 1,35 g/cm³, ÖZ = 49 |
| 2500 | Bindemittel I: Acrylat-Copolymer-Emulsion, Festkörper: 37,5 % |
| 4000 | Bindemittel II: Acrylat-Copolymer-Emulsion, Festkörper: 55 % |

Dabei gilt für diesen roten Farblack:

$$PZ = \sum_{1}^{x} \frac{(m_P \times f)_x}{(m_{BM} + m_A)} = \frac{1200g \times 36,3\frac{cm^3}{g}}{3137,5g + 160g} = 13,2\frac{cm^3}{g}$$

mit $m_p$ = 1200 g Diketo-Pyrrolo-Pyrrol-Pigment

f = ÖZ/d = 49/1,35 g/cm³ = 36,3 cm³/g (für Diketo-Pyrrolo-Pyrrol-Pigment)

$m_{BM}$ = (0,375 * 2500 g Bindemittel I) + (0,55 * 4000 g Bindemittel II) = = 937,5 g Bindemittel I + 2200 g Bindemittel II = 3137,5 g Bindemittel

$m_A$ = (0,4 * 400 g Dispergieradditiv) = 160 g Festkörper des Dispergieradditivs

Farblack zur Bildung einer dunkelgrünen Farblackschicht (d) (in g):

$$L^* = 14,52 \qquad a^* = -49,34 \qquad b^* = 10,91$$

| | |
|---|---|
| 2500 | Wasser |
| 2500 | organisches Lösungsmittel Isopropylalkohol |
| 200 | basisches Additiv 25 % in Wasser (flüchtig) |
| 400 | Dispergieradditiv, Festkörper: 40 % |
| 200 | Füllstoff Siliziumdioxid, mittlere Teilchengröße: 16 nm |
| 100 | Füllstoff Siliziumdioxid, mittlere Teilchengröße: 7,5 μm |
| 1200 | Pigment Kupfer-Phthalocyanin chloriert, Dichte d = 2,03 g/cm³, ÖZ = 30 |
| 2500 | Bindemittel I: Acrylat-Copolymer-Emulsion, Festkörper: 37,5 % |

(fortgesetzt)

| 4000 | Bindemittel II: Acrylat-Copolymer-Emulsion, Festkörper: 55 % |
|---|---|

Dabei gilt für diesen dunkelgrünen Farblack:

$$PZ = \sum_{1}^{x}\frac{(m_P \times f)_x}{(m_{BM}+m_A)} = \frac{1200g \times 14,8\frac{cm^3}{g}}{3137,5g+160g} = 5,4\frac{cm^3}{g}$$

mit $m_p$ = 1200 g Pigment Kupfer-Phthalocyanin chloriert
f = ÖZ/d = 30/2,03 g/cm³= 14,8 cm³/g (für Pigment Kupfer-Phthalocyanin chloriert)
$m_{BM}$ = (0,375 * 2500 g Bindemittel I) + (0,55 * 4000 g Bindemittel II) = = 937,5 g Bindemittel I + 2200 g Bindemittel II = 3137,5 g Bindemittel
$m_A$ = (0,4 * 400 g Dispergieradditiv) = 160 g Festkörper des Dispergieradditivs

Farblack zur Bildung einer gelben Farblackschicht (e) (in g):

$$L^* = 86,35 \qquad a^* = 1,91 \qquad b^* = 89,79$$

| 2500 | Wasser |
|---|---|
| 2500 | organisches Lösungsmittel Isopropylalkohol |
| 200 | basisches Additiv 25 % in Wasser (flüchtig) |
| 400 | Dispergieradditiv, Festkörper: 40 % |
| 200 | Füllstoff Siliziumdioxid, mittlere Teilchengröße: 16 nm |
| 100 | Füllstoff Siliziumdioxid, mittlere Teilchengröße: 7,5 μm |
| 1200 | Monoazo-Benzimidazolon-Pigment, Dichte d = 1,57 g/cm³, ÖZ = 56 |
| 2500 | Bindemittel I: Acrylat-Copolymer-Emulsion, Festkörper: 37,5 % |
| 4000 | Bindemittel II: Acrylat-Copolymer-Emulsion, Festkörper: 55 % |

Dabei gilt für diesen gelben Farblack:

$$PZ = \sum_{1}^{x}\frac{(m_P \times f)_x}{(m_{BM}+m_A)} = \frac{1200g \times 35,7\frac{cm^3}{g}}{3137,5g+160g} = 13\frac{cm^3}{g}$$

mit $m_p$ = 1200 g Monoazo-Benzimidazolon-Pigment
f = ÖZ/d = 56/1,57 g/cm³= 35,7 cm³/g (für Monoazo-Benzimidazolon-Pigment)
$m_{BM}$ = (0,375 * 2500 g Bindemittel I) + (0,55 * 4000 g Bindemittel II) = = 937,5 g Bindemittel I + 2200 g Bindemittel II = 3137,5 g Bindemittel
$m_A$ = (0,4 * 400 g Dispergieradditiv) = 160 g Festkörper des Dispergieradditivs

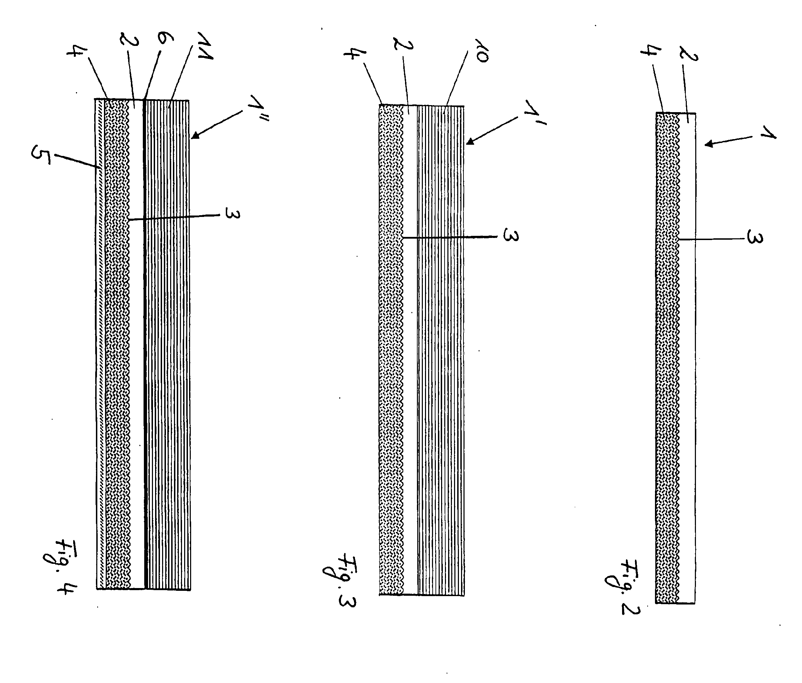

Figur 2 zeigt eine erste Folie 1 im Querschnitt, welche eine transparente Replizierschicht 2 mit einer diffraktiven Reliefstruktur 3 und eine eingefärbte Farblackschicht 4 aufweist. Die Farblackschicht 4 grenzt unmittelbar an die Seite der Replizierschicht 2 an, auf der sich die diffraktive Reliefstruktur 3 befindet. Die Replizierschicht 2 weist eine Schichtdicke von 0,5 μm auf, während die Farblackschicht eine Schichtdicke von 3 μm aufweist.
Die Replizierschicht 2 ist hier thermoplastisch und aus einem Lack folgender, bereits oben angegebener Zusammensetzung gebildet worden (in g):

| | |
|---|---|
| 17000 | Methylethylketon |
| 1000 | Diacetonalkohol |
| 1500 | Acrylpolymer auf Basis von Methylmethacrylat (Dichte d = 1,19 g/cm$^3$) |
| 2750 | mit denaturiertem Ethanol befeuchtetes Cellulosenitrat, 65%, (Dichte d = 1,25 g/cm$^3$) |
| 1500 | Polyisocyanat auf Basis Isophorondiisocyanat |

Die diffraktive Reliefstruktur 3 ist in Form eines Lineargitters mit sinusförmigem Profil und einer Spatialfrequenz von 1000 Linien/mm in die Replizierschicht 2 mittels eines beheizten, profilierten Werkzeugs eingeprägt worden.

Die Farblackschicht 4 ist hier aus einem schwarzen Farblack folgender Zusammensetzung gebildet worden (in g):

| | |
|---|---|
| 2500 | Wasser |
| 2500 | organisches Lösungsmittel Isopropylalkohol |
| 200 | basisches Additiv, 25 Gew.-% in Wasser (flüchtig) |
| 400 | Dispergieradditiv, Festkörper: 40 Gew.-% |
| 200 | Siliziumdioxid-Füllstoff (mittlere Teilchengröße: 16 nm) |
| 100 | Siliziumdioxid-Füllstoff (mittlere Teilchengröße: 7,5 nm) |
| 1000 | Pigment Kohlenstoffschwarz, Dichte d = 1,8 g/cm$^3$, Ölzahl ÖZ = 230 |
| 2500 | Bindemittel I (Acrylat - Copolymer - Emulsion, Festkörper: 37,5 Gew.-%) |
| 4000 | Bindemittel II (Acrylat - Copolymer - Emulsion, Festkörper: 55 Gew.-%) |

Dabei gilt für diesen schwarzen Farblack:

$$PZ = \sum_{1}^{x} \frac{(m_P \times f)_x}{(m_{BM} + m_A)} = \frac{1000 g \times 127{,}8 \frac{cm^3}{g}}{3137{,}5 g + 160 g} = 38{,}7 \frac{cm^3}{g}$$

mit $m_p$ = 1000 g Kohlenstoffschwarz

f = ÖZ/d = 230/1,8 g/cm$^3$ = 127,8 cm$^3$/g (für Kohlenstoffschwarz)

$m_{BM}$ = (0,375 $*$ 2500 g Bindemittel I) + (0,55 $*$ 4000 g Bindemittel II) = = 937,5 g Bindemittel I + 2200 g Bindemittel II = 3137,5 g Bindemittel

$m_A$ = (0,4 $*$ 400 g Dispergieradditiv) = 160 g Festkörper des Dispergieradditivs

Bei Betrachtung der Folie 1 auf Seiten der Replizierschicht 2 zeigt sich ein latenter optisch variabler Effekt.

Figur 3 zeigt eine zweite Folie 1' in Form einer Laminierfolie im Querschnitt. Die Laminierfolie weist eine selbsttragende transparente Trägerfolie 10 aus PET in einer Foliendicke von 19 μm, daran angrenzend die Replizierschicht 2 mit der diffraktiven Reliefstruktur 3 und weiterhin die Farblackschicht 4 auf. Die Replizierschicht 2 und die Farblackschicht 4 sind wie zu Figur 2 beschrieben ausgebildet. Dabei wird die Laminierfolie derart auf ein hier nicht dargestelltes Substrat aufgebracht, dass die Farblackschicht 4 mit dem Substrat verbunden wird, insbesondere mittels einer Kleberschicht. Die Kleberschicht kann dabei auf das Substrat und/oder auf die Farblackschicht 4 aufgebracht werden. Die Trägerfolie 10 ist permanent mit der Replizierschicht 2 verbunden und verbleibt als Schutzschicht über der Replizierschicht 2 und der Farblackschicht 4 auf dem Substrat.

Bei Betrachtung der Folie 1' auf Seiten der Trägerfolie 10 zeigt sich ein latenter optisch variabler Effekt.

Figur 4 zeigt eine dritte Folie 1 " in Form einer Transferfolie im Querschnitt. Die Transferfolie weist eine von einer Übertragungslage ablösbare Trägerfolie 11 aus PET mit einer Schichtdicke von 19 μm auf.

Zwischen der Übertragungslage und der ablösbaren Trägerfolie 11 ist optional eine Ablöseschicht 6 angeordnet, welche eine Trennung von Trägerfolie 11 und Übertragungslage ermöglicht oder begünstigt. Eine solche Ablöseschicht 6 ist üblicherweise aus Wachs, Silikon oder dergleichen gebildet und weist häufig eine Schichtdicke im Bereich von 1 nm bis 1,5 μm, insbesondere im Bereich von 4 nm bis 12 nm, auf.

Weiterhin kann zwischen der ablösbaren Trägerfolie 11 und der Übertragungslage bzw. zwischen der Ablöseschicht 6 und der Übertragungslage eine Schutzlackschicht, beispielsweise mit einer Schichtdicke im Bereich von 0,5 μm bis 15 μm, insbesondere im Bereich von 1 μm bis 3 μm, angeordnet sein, die nach dem Ablösen der Trägerfolie 11 auf der Übertragungslage verbleibt und deren Oberfläche vor mechanischem und/oder chemischem Angriff schützt.

Eine solche Schutzlackschicht kann beispielsweise aus einem Lack folgender Zusammensetzung gebildet werden (in g):

| | |
|---|---|
| 2200 | Methylethylketon |
| 300 | Butanol |
| 1500 | Acrylpolymer auf Basis Methylmetacrylat |
| 30 | UV-Absorber |
| 10 | Licht-Stabilisator |
| 120 | Feldspat, Dichte d= 2,6 g/m$^3$ |

Die Übertragungslage der Transferfolie gemäß Figur 4 umfasst somit in dieser Reihenfolge eine optionale Schutzlackschicht, die Replizierschicht 2, die Farblackschicht 4 und eine Kleberschicht 5, welche auf der, der Trägerfolie 11 abgewandten Seite der Farblackschicht 4 angeordnet ist. Hierbei kann es sich um eine Heißkleberschicht oder um eine Kaltkleberschicht handeln. Die Kleberschicht 5 weist insbesondere eine Schichtdicke im Bereich von 0,2 bis 10 μm, bevorzugt im Bereich von 1 bis 2,5 μm, auf.

Die Transferfolie gemäß Figur 4 wird so auf einem Substrat angeordnet, dass die Kleberschicht 5 zum Substrat zeigt. Anschließend wird der Kleber der Kleberschicht 5 aktiviert und mit dem Substrat verbunden. Dies kann vollflächig oder lediglich bereichsweise erfolgen, so dass die Übertragungslage beim Abziehen der Trägerfolie 11 vollständig oder lediglich bereichsweise auf dem Substrat haften bleibt. Bei einer lediglich bereichsweisen Übertragung der Übertragungslage der Transferfolie auf ein Substrat verbleiben die nicht mittels der Kleberschicht 5 am Substrat fixierten Bereiche der Übertragungslage auf der Trägerfolie 11 und werden mit dieser entfernt.

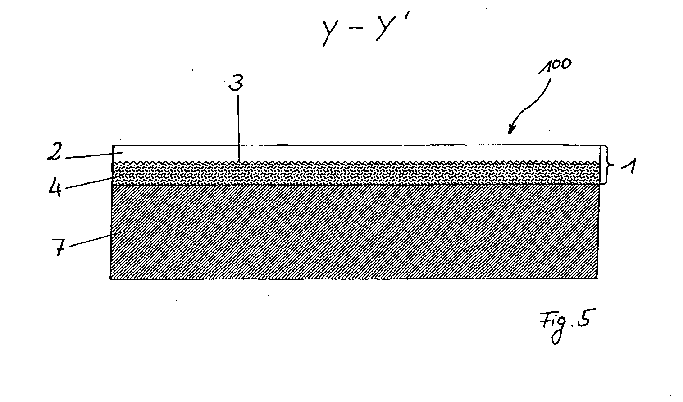

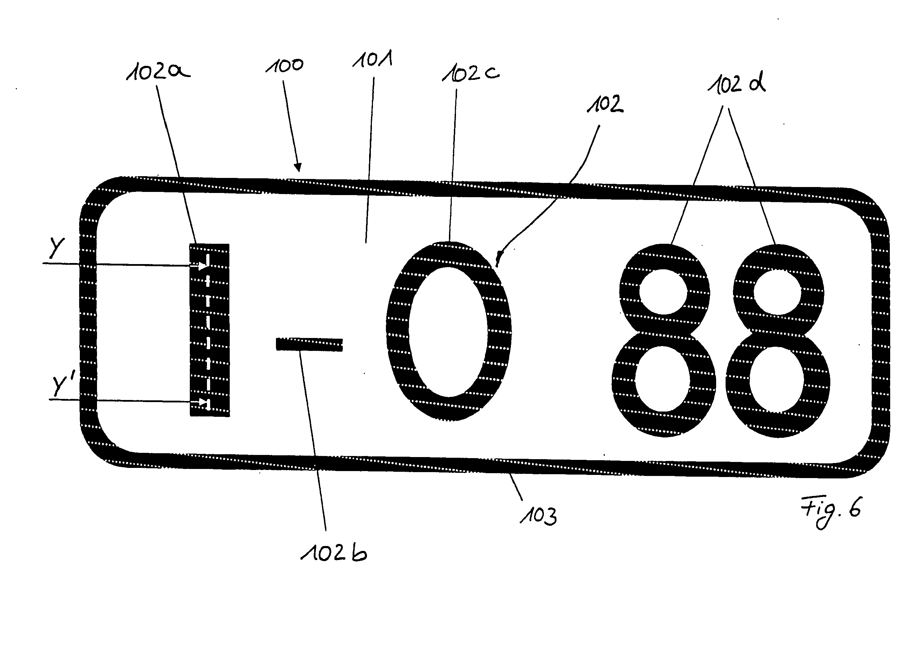

Figur 5 zeigt eine auf ein Substrat 7 in Form eines KFZ-Nummernschilds 100 aufgebrachte erste Folie gemäß Figur 2 im Querschnitt Y - Y' (vergleiche Figur 6). Die Farblackschicht 4 ist mit dem Substrat 7 dauerhaft verklebt.

Figur 6 zeigt das das KFZ- Nummernschilds 100 aus Figur 5 in der Draufsicht. Das KFZ- Nummernschild besteht aus einer mit einer weißen, retroreflektierenden Beschichtung versehenen Trägerplatte 101, die üblicherweise aus einem Aluminium- oder Stahlblech besteht. In die Trägerplatte 101 wird mittels eines mechanischen Prägevorgangs eine Kennzeichenlegende 102 erhaben eingeprägt. Dabei besteht die Kennzeichenlegende 102 aus alphanumerischen Zeichen 102a, 102 b, 102c, 102d, die beispielsweise in Deutschland auf den Zulassungsort des Kraftfahrzeugs hinweisen sowie eine individuelle Nummerierung ausbilden. Um die Kennzeichenlegende 102 des geprägten KFZ- Nummernschilds 100 gut sichtbar zu machen, sind die erhaben geprägten Bereiche farbig mit einer schwarzen Folie mit latentem optisch variablem Effekt, dessen Vorhandensein angedeutet ist durch die gepunkteten weißen Linien, beschichtet. Weiterhin ist eine erhaben geprägte Umrandung 103 des KFZ- Nummernschilds 100 vorgesehen, welche ebenfalls mit der schwarzen Folie mit latentem optisch variablem Effekt beschichtet ist. Dazu wird ein entsprechender Farbfolienübertrag mittels einer Transferfolie, die aus einer Trägerfolie und einer davon ablösbaren Übertragungslage besteht, wie sie beispielsweise in Figur 4 beschrieben ist, durchgeführt. Beim bereichsweisen Übertrag der Übertragungslage wird die Transferfolie in mechanischen Kontakt mit den erhaben geprägten Bereichen der Trägerplatte 101 des KFZ- Nummernschilds 100 gebracht und die Übertragungslage unter Druck, gegebenenfalls auch unter Druck und erhöhter Temperatur, lagegenau auf die erhabenen Bereiche übertragen.

Selbstverständlich sind aber auch andere Einsatzgebiete für die Folie, wie oben beschrieben beispielsweise auf Oberflächen von Möbeln, Wertdokumenten, KFZ-Innenraumteilen und dergleichen, von Vorteil.

**Patentansprüche**

1. Folie (1), welche mindestens eine transparente Replizierschicht (2) mit einer diffraktiven Reliefstruktur (3) sowie eine Reflexionsschicht umfasst,
wobei die Reflexionsschicht durch mindestens eine pigmentierte Farblackschicht (4) ausgebildet ist, die unmittelbar an die diffraktive Reliefstruktur (3) angrenzend angeordnet ist und wobei die mindestens eine Farblackschicht (4) eine Schichtdicke im Bereich von 1 μm bis 50 μm aufweist, wobei ein Brechungsindex $n_1$ der mindestens einen Farblackschicht (4) und ein Brechungsindex $n_2$ der Replizierschicht (2) so gewählt sind, dass ein Betrag einer Differenz von Imaginärteilen der Brechungsindizes $n_1$ und $n_2$ im Bereich von 0,05 bis 0,7 liegt, und wobei eine Helligkeit L* der mindestens einen Farblackschicht (4) im Bereich von 0 bis 90 liegt, wobei die Folie (1, 1', 1 ") einen von der diffraktiven Reliefstruktur (3) erzeugten, latenten optisch variablen Effekt zeigt und die Helligkeit L* nach der CIELAB-Formel L*a*b* unter folgenden Bedingungen gemessen wurde: Messgeometrie: diffus / 8° nach DIN 5033 und ISO 2496, Durchmesser Messöffnung: 26 mm, Spektralbereich: 360 - 700 nm nach DIN 6174, Normlichtart: D65.

**2.** Folie (1) nach Anspruch 1,
**dadurch gekennzeichnet,**
**dass** die Pigmentierung der mindestens einen Farblackschicht (4) so gewählt ist, dass eine Pigmentierungszahl PZ im Bereich von 1,5 bis 120 cm$^3$/g liegt, wobei sich die Pigmentierungszahl PZ errechnet nach

$$PZ = \sum_{1}^{x} \frac{(m_P \times f)_x}{(m_{BM} + m_A)} \qquad und \qquad f = \frac{\ddot{O}Z}{d} \quad ,$$

wobei gilt:

$m_P$ = Masse eines Pigments in der Farblackschicht in g,
$m_{BM}$ = konstant; Masse eines Bindemittels in der Farblackschicht in g,
$m_A$ = konstant; Masse Festkörper der Additive in der Farblackschicht in g,
ÖZ = Ölzahl eines Pigments (nach DIN 53199),
d = Dichte eines Pigments (nach DIN 53193),
x = Laufvariable, entsprechend der Anzahl an unterschiedlichen Pigmenten in der Farblackschicht.

**3.** Folie (1) nach Anspruch 1 oder Anspruch 2,
**dadurch gekennzeichnet,**
**dass** eine Pigmentierung der mindestens einen Farblackschicht (4) so gewählt ist, dass eine Transmission $\tau$ von sichtbarem Licht durch die mindestens eine Farblackschicht (4) kleiner als 75 % beträgt.

**4.** Folie (1) nach einem der Ansprüche 1 bis 3,
**dadurch gekennzeichnet,**
**dass** bei einer Helligkeit L* der mindestens einen Farblackschicht (4) im Bereich von 0 bis 50, welche einem dunklen Farbton entspricht, der Betrag der Differenz der Imaginärteile der Brechungsindizes $n_1$ und $n_2$ im Bereich von 0,05 bis 0,5 liegt und dass bei einer Helligkeit L* der mindestens einen Farblackschicht (4) im Bereich von 50 bis 90, welche einem hellen Farbton entspricht, der Betrag der Differenz der Imaginärteile der Brechungsindizes $n_1$ und $n_2$ im Bereich von 0,3 bis 0,5 liegt.

**5.** Folie (1) nach einem der Ansprüche 1 bis 4,
**dadurch gekennzeichnet,**
**dass** senkrecht zur Ebene der transparenten Replizierschicht (2) gesehen mindestens zwei unterschiedliche Farblackschichten (4) in unterschiedlichen Bereichen der diffraktiven Reliefstruktur (3) angeordnet sind, welche sich in ihren Imaginärteilen der Brechungsindizes und/oder in ihrer Helligkeit L* und/oder in ihrer Pigmentierungszahl PZ unterscheiden.

**6.** Folie (1) nach Anspruch 3,
**dadurch gekennzeichnet,**
**dass** senkrecht zur Ebene der transparenten Replizierschicht (2) gesehen mindestens zwei unterschiedliche Farblackschichten (4) in unterschiedlichen Bereichen der diffraktiven Reliefstruktur (3) angeordnet sind, welche sich in ihren Imaginärteilen der Brechungsindizes und/oder in ihrer Helligkeit L* und/oder in ihrer Pigmentierungszahl PZ und/oder in ihrer Transmission $\tau$ unterscheiden.

**7.** Folie (1) nach einem der Ansprüche 1 bis 6,
**dadurch gekennzeichnet,**
**dass** senkrecht zur Ebene der transparenten Replizierschicht (2) gesehen mindestens in einem Bereich der transparenten Replizierschicht (2), insbesondere in einem Bereich der diffraktiven Reliefstruktur (3), mindestens eine weitere farbige Lackschicht angeordnet ist, deren Brechungsindex $n_3$ sich vom Brechungsindex $n_1$ der transparenten Replizierschicht (2) nicht oder um weniger als 0,05 unterscheidet.

**8.** Folie (1) nach einem der Ansprüche 1 bis 7,
**dadurch gekennzeichnet,**
**dass** die Farblackschicht (4) eine Schichtdicke im Bereich von 2 $\mu$m bis 10 $\mu$m aufweist.

**9.** Verwendung einer Folie (1) nach einem der Ansprüche 1 bis 8 zur Beschichtung von Kraftfahrzeugkennzeichen unter Ausbildung einer Kennzeichen-Legende, welche alphanumerische Zeichen enthält,
oder zur
Beschichtung von Verpackungen, von Kunststoffteilen für den KFZ-Innenraum, von Möbeln und von Wertdokumenten, wie IC-Karten, Tickets oder Lotterielosen.

## Claims

1. Film (1), which comprises at least one transparent replicating layer (2) having a diffractive relief structure (3) as well as a reflective layer, wherein the reflective layer is formed by at least one pigmented coloured varnish layer (4), which is arranged directly bordering the diffractive relief structure (3) and wherein the at least one coloured varnish layer (4) has a layer thickness within the range of 1 $\mu$m to 50 $\mu$m, wherein a refractive index $n_1$ of the at least one coloured varnish layer (4) and a refractive index $n_2$ of the replicating layer (2) is chosen in such a way that a value of a difference of imaginary parts of the refractive indices $n_1$ and $n_2$ is within the range of 0.05 to 0.7, and wherein a brightness L* of the at least one coloured varnish layer (4) is within the range of 0 to 90, wherein the film (1, 1', 1") shows a latent optically variable effect that is produced by the diffractive relief structure (3) and the brightness L* has been measured according to the CIELAB formula L*a*b* under the following conditions: diffuse / 8° according to DIN 5033 and ISO 2496, diameter of measuring aperture: 26mm, spectral range: 360 - 700 nm according to DIN 6174, standard illuminant: D65.

2. Film (1) according to claim 1,
   **characterised in that**,
   the pigmentation of the at least one coloured varnish layer (4) is chosen in such a way that a pigmentation value PZ is within the range of 1.5 to 120 cm$^3$/g, wherein the pigmentation value PZ is calculated according to

$$PZ = \sum_{1}^{x} \frac{(m_P \times f)_x}{(m_{BM} + m_A)} \qquad \text{and} \qquad f = \frac{\ddot{O}Z}{d} \quad,$$

wherein:
$m_P$ = mass of a pigment in the coloured varnish layer in g,
$m_{BM}$ = constant; mass of a binding agent in the coloured varnish layer in g,
$m_A$ = constant; mass of solid body of the additives in the coloured varnish layer in g,
$\ddot{O}Z$ = oil number of a pigment (according to DIN 53199)
d = density of a pigment (according to DIN 53193) x = control variable, according to the number of different pigments in the coloured varnish layer.

3. Film (1) according to claim 1 or claim 2,
   **characterised in that**,
   a pigmentation of the at least one coloured varnish layer (4) is chosen in such a way that a transmission $\tau$ of visible light through the at least one coloured varnish layer (4) is smaller than 75%.

4. Film (1) according to one of claims 1 to 3,
   **characterised in that**,
   in the case of a brightness L* of the at least one coloured varnish layer (4) within the range of 0 to 50, which corresponds with a dark colour tone, the value of the difference of the imaginary parts of the refractive indices $n_1$ and $n_2$ is within the range of 0.05 to 0.5 and that in the case of a brightness L* of the at least one coloured varnish layer (4) within the range of 50 to 90, which corresponds to a bright colour tone, the value of the difference of the imaginary parts of the refractive indices $n_1$ and $n_2$ is within the range of 0.3 to 0.5.

5. Film (1) according to one of claims 1 to 4,
   **characterised in that**,
   at least two different coloured varnish layers (4), as seen from perpendicular to the plane of the transparent replicating layer (2), are arranged in different regions of the diffractive relief structure (3), which differ in their imaginary parts of the refractive indices and/or in their brightness L* and/or in their pigmentation value PZ.

**6.** Film (1) according to claim 3,
**characterised in that**,
at least two different coloured varnish layers (4), as seen from perpendicular to the plane of the transparent replicating layer (2), are arranged in different regions of the diffractive relief structure (3), which differ in their imaginary parts of the refractive indices and/or in their brightness L* and/or in their pigmentation value PZ and/or in their transmission $\tau$.

**7.** Film (1) according to one of claims 1 to 6,
**characterised in that**,
at least one further coloured varnish layer is arranged, as seen from perpendicular to the plane of the transparent replicating layer (2), at least in a region of the transparent replicating layer (2), in particular in a region of the diffractive relief structure (3), the refractive index $n_3$ of which varnish layer differs from the refractive index $n_1$ of the transparent replicating layer (2) not at all or by no more than 0.05.

**8.** Film (1) according to one of claims 1 to 7,
**characterised in that**,
the coloured varnish layer (4) has a layer thickness within the range of 2 $\mu$m to 10 $\mu$m.

**9.** Use of a film (1) according to one of claims 1 to 8 for the coating of motor vehicle number plates under formation of a number plate legend, which contains alphanumeric symbols,
or
for the coating of packaging, of plastic parts for the motor vehicle interior, of furniture and of valuable documents such as IC cards, tickets or lottery tickets.

**Revendications**

**1.** Feuille (1), qui comprend au moins une couche de réplication (2) transparente présentant une structure en relief (3) diffractive ainsi qu'une couche réfléchissante, sachant que la couche réfléchissante est réalisée par au moins une couche de vernis coloré pigmentée (4), qui est disposée de manière à jouxter directement la structure en relief (3) diffractive, et sachant que la couche de vernis coloré (4) au moins au nombre de une présente une épaisseur de couche située dans la plage allant de 1 $\mu$m à 50 $\mu$m, sachant qu'un indice de réfraction $n_1$ de la couche de vernis coloré (4) au moins au nombre de une et qu'un indice de réfraction $n_2$ de la couche de réplication (2) sont choisis de telle sorte qu'une différence entre les parties imaginaires des indices de réfraction $n_1$ et $n_2$ présente une valeur située dans la plage allant de 0,05 à 0,7, et sachant qu'une luminosité L* de la couche de vernis coloré (4) au moins au nombre de une est située dans la plage allant de 0 à 90, sachant que la feuille (1, 1', 1") affiche un effet à variation optique latent généré par la structure en relief (3) diffractive et que la luminosité L* a été mesurée selon la formule CIELAB L*a*b* aux conditions qui suivent : géométrie de mesure : diffuse/8° selon la norme DIN 5033 et la norme ISO 2496, diamètre ouverture de mesure : 26 mm, domaine spectral : 360-700 nm selon la norme DIN 6174, type de lumière normale : D65.

**2.** Feuille (1) selon la revendication 1,
**caractérisée en ce que**
la pigmentation de la couche de vernis coloré (4) au moins au nombre de une est choisie de telle sorte qu'un indice de pigmentation PZ est compris dans la plage allant de 1,5 à 120 cm³/g, sachant que l'indice de pigmentation PZ est calculé selon les formules qui suivent :

$$PZ = \sum_{1}^{x} \frac{(m_P \times f)_x}{(m_{BM} + m_A)}$$

et

$$f = \frac{\ddot{O}Z}{d}$$

sachant que s'appliquent :

$m_p$ = masse d'un pigment dans la couche de vernis coloré en g ;

$m_{BM}$ = constante, masse d'un liant dans la couche de vernis coloré en g ;

$m_A$ = constante, masse corps solides des additifs dans la couche de vernis coloré en g ;

ÖZ = indice d'huile d'un pigment (selon la norme DIN 53199) ;

d = densité d'un pigment (selon la norme DIN 53193) ;

x = variable courante, correspondant au nombre de pigments différents dans la couche de vernis coloré.

3. Feuille (1) selon la revendication 1 ou 2,
   **caractérisée en ce que**
   une pigmentation de la couche de vernis coloré (4) au moins au nombre de une est choisie de telle manière qu'une transmission $\tau$ de lumière visible par la couche de vernis coloré (4) au moins au nombre de une est inférieure à 75 %.

4. Feuille (1) selon l'une quelconque des revendications 1 à 3,
   **caractérisée en ce que**
   pour une luminosité L* de la couche de vernis coloré (4) au moins au nombre de une dans la plage allant de 0 à 50, laquelle correspond à une teinte foncée, la différence entre les parties imaginaires des indices de réfraction $n_1$ et $n_2$ présente une valeur située dans la plage allant de 0,05 à 0,5, et **en ce que** pour une luminosité L* de la couche de vernis coloré (4) au moins au nombre de une dans la plage allant de 50 à 90, laquelle correspond à une teinte claire, la différence entre les parties imaginaires des indices de réfraction $n_1$ et $n_2$ présente une valeur située dans la plage allant de 0,3 à 0,5.

5. Feuille (1) selon l'une quelconque des revendications 1 à 4,
   **caractérisée en ce que**
   sont disposées, vu de manière perpendiculaire par rapport au plan de la couche de réplication (2) transparente, dans diverses zones de la structure en relief (3) diffractive, au moins deux couches de vernis coloré (4) différentes, lesquelles se distinguent par leurs parties imaginaires des indices de réfraction et/ou par leur luminosité L* et/ou par leur indice de pigmentation PZ.

6. Feuille (1) selon la revendication 3,
   **caractérisée en ce que**
   sont disposées, vu de manière perpendiculaire par rapport au plan de la couche de réplication (2) transparente, dans diverses zones de la structure en relief (3) diffractive, au moins deux couches de vernis coloré (4) différentes, lesquelles se distinguent par leurs parties imaginaires des indices de réfraction et/ou par leur luminosité L* et/ou par leur indice de pigmentation PZ et/ou par leur transmission $\tau$.

7. Feuille (1) selon l'une quelconque des revendications 1 à 6,
   **caractérisée en ce que**
   est disposée, vu de manière perpendiculaire par rapport au plan de la couche de réplication (2) transparente, au moins dans une zone de la couche de réplication (2) transparente, en particulier dans une zone de la structure en relief (3) diffractive, au moins une autre couche de vernis coloré, l'indice de réfraction $n_3$ de cette dernière n'étant pas différent de l'indice de réfraction $n_1$ de la couche de réplication (2) transparente ou la différence entre lesdits deux indices de réfraction étant égale à une valeur inférieure à 0,05.

8. Feuille (1) selon l'une quelconque des revendications 1 à 7,
   **caractérisée en ce que**
   la couche de vernis coloré (4) présente une épaisseur de couche située dans la plage allant de 2 $\mu$m à 10 $\mu$m.

9. Utilisation d'une feuille (1) selon l'une quelconque des revendications 1 à 8 servant à couvrir des plaques d'immatriculation de véhicules automobiles en formant une légende de plaque d'immatriculation, laquelle comporte des signes alphanumériques,

ou servant
à couvrir des emballages, des pièces en plastique pour l'habitacle d'un véhicule automobile, des meubles et des documents de valeur, tels que la carte à circuit intégré, les tickets ou les billets de loterie.

**Fig. 1**

Fig. 2

Fig. 3

Fig. 4

$$Y - Y'$$

Fig.5

Fig. 6

EP 2 151 328 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5260165 A
- DE 10226116 A1
- EP 0461475 A1
- DE 10241803 A1